Europäisches Patentamt

(19) European Patent Office

Office européen des brevets

(11) Publication number: **0 034 500**

A1

(12) # EUROPEAN PATENT APPLICATION

(21) Application number: **81300661.6**

(22) Date of filing: **18.02.81**

(51) Int. Cl.³: **F 16 B 4/00**
**H 02 G 15/18, F 16 L 13/00**
**B 23 P 11/00**

(30) Priority: **19.02.80 GB 8005501**

(43) Date of publication of application:
**26.08.81 Bulletin 81/34**

(84) Designated Contracting States:
**AT BE CH DE FR IT LI NL SE**

(71) Applicant: **N.V. RAYCHEM S.A.**
**Diestsesteenweg 692**
**B-3200 Kessel-lo(BE)**

(72) Inventor: **Nolf, Jean Marie Etienne**
**Chaussee de Namur 6**
**B-5990 Hamme-Mille(BE)**

(72) Inventor: **Jones, John Philip**
**11 Marlborough Road Chiseldon**
**Swindon Wiltshire(GB)**

(74) Representative: **Benson, John Everett et al,**
**Raychem Limited Morley House 26 Holborn Viaduct**
**London EC1(GB)**

(54) Closure assembly for a recoverable wrap-around sleeve.

(57) A closure assembly comprising a sleeve and a flexible elongate fastening member (1) comprising first and second wire-like or rod-like gripping portions arranged substantially parallel to, and laterally spaced from, each other with their lengths disposed substantially relative to the fastening member and connected to each other by a plurality of wire-like or rod-like connecting members which lie substantially entirely outside the plane containing the first and second gripping portions, the arrangement being such that the fastening member can grip between its first and second gripping portions one or more fastening portions to hold the sleeve closed.

The fastening member (1) is preferably in a form which can be made by shaping a single extruded wire, and may be made of heat-recoverable metal, and may be embedded in one fastening edge (20) of the sleeve to form a heat-recoverable cavity capable of gripping the suitably shaped other fastening edge (21) of the sleeve.

Fig. 16.

Croydon Printing Company Ltd.

DESCRIPTION

B046

CLOSURE ASSEMBLY FOR A RECOVERABLE WRAP-AROUND SLEEVE

This invention relates to a closure assembly, comprising a recoverable wrap-around sleeve and a fastening member.

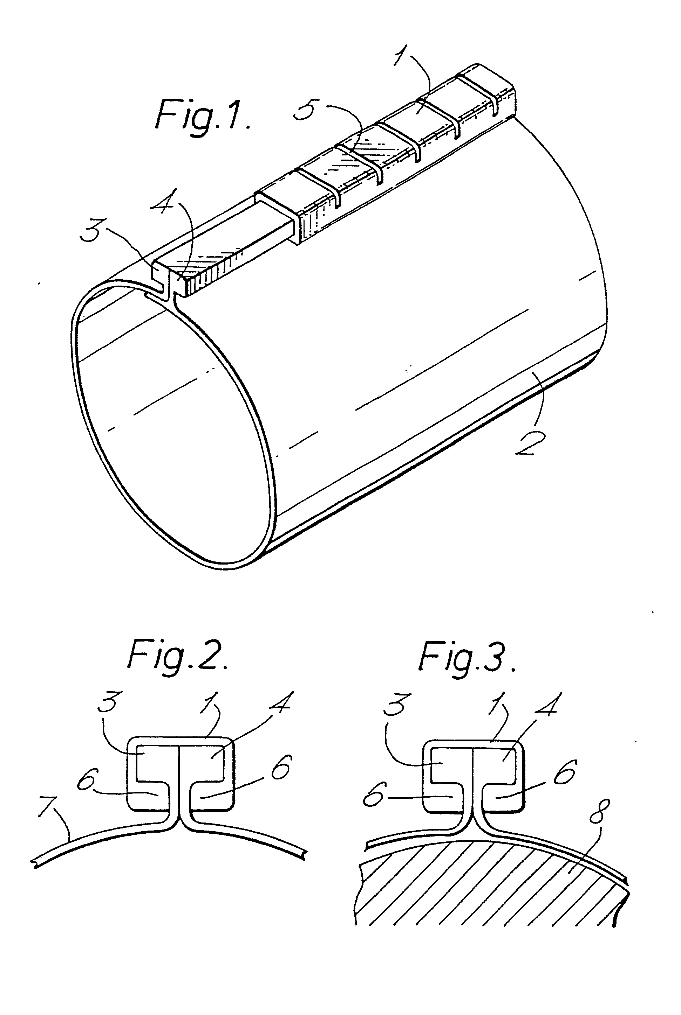

To facilitate understanding of the present invention, a known kind of sleeve and fastening member are illustrated in Figures 1 to 3 of the accompanying drawings.

Figure 1 shows the known fastening channel 1 in position around part of the projecting fastening rails 3, 4 of a heat-recoverable sleeve 2 which has been wrapped around an object (not shown) such as a cable splice, so as to bring together the fastening rails 3, 4 which are formed at the opposite ends of the sleeve. Slots 5 are provided in the channel 1 in an attempt to allow enough flexibility for the channel to follow, at least to some extent, any longitudinal irregularities in the object around which the sleeve is eventually shrunk. The channel 1 may be made of heat-recoverable material, as described and claimed in our British Patent Specification No. 1,529,351 to grip the rails 3, 4 upon heat-recovery of the channel 1.

Figure 2 shows an enlarged end view of the known channel 1 and rails 3, 4 from which can be seen the considerable clearance which must normally be present between the gripping portions 6 of the channel 1 and the adjacent body portion 7 of the sleeve 2, in order to avoid undue difficulty in sliding the channel longitudinally onto the rails. This clearance, however, has the disadvantage that, when the sleeve is subsequently shrunk, as shown in Figure 3, onto an object 8 such as a cable splice, the tension of the circumferential shrinkage produces a moment of rotation of the rails 3, 4 about their respective gripping portions 6, which can lead to the formation of tents under the sleeve, or to pulling out of the rails from the channel, especially at high unresolved (i.e. residual) recovery, using average channel dimensional tolerances.

In certain applications of recoverable sleeves such known channels have the disadvantage of lack of flexibility: in spite of the provision of slots 5 it can be difficult to ensure that the channel follows any longitudinal irregularities that the sleeve must adapt to. We have found that this problem can be particularly troublesome where sleeves are used that have recoverability only at their ends. In such cases a considerable change in the longitudinal shape of the sleeve occurs on recovery.

The present invention therefore provides a closure assembly comprising a recoverable (preferably heat-recoverable) wrap-around sleeve; and a longitudinally flexible elongate fastening member, which comprises: first and second wire-like or rod-like gripping portions arranged substantially parallel to, and laterally spaced from, each other with their lengths disposed substantially longitudinally relative to the fastening member, and connected to each other by each of at least three wire-like or rod-like connecting members, which lie substantially outside the plane containing the first and second gripping portions; the arrangement being such that the fastening member can grip between, and by mutual gripping action of, its first and second gripping portions one or more fastening portions of the sleeve to hold the sleeve closed during its recovery.

The invention also provides a method of covering a cable splice or other substrate with the closure assembly of the invention, wherein the sleeve is fastened around the substrate by means of the fastening member engaging one or more fastening portions of the sleeve.

The invention further provides a longitudinally flexible elongate fastening member, comprising a single length of a wire-like or rod-like material having a configuration the envelope of which is a channel having an elongate neck; the elongate material forming a series of substantially linear first regions which define each edge of the neck, and a series of second regions which join together first regions of one edge with those of the other edge, and whose curvature gives the channel its cross-sectional shape.

The fastening member may be encased in a polymeric material to give it protection. The fastening member is, in fact, preferably embedded in polymeric material forming an edge portion of the recoverable sleeve; in this case an opposite edge portion of the sleeve will be formed as a longitudinal bead to provide a single fastening portion, which can be snapped within the fastening member. This arrangement is preferred when the fastening member is heat-recoverable.

It has surprisingly been found that adequate fastening strength can be obtained with a structure of wire-like or rod-like preferably metallic members having the features defined above, thus reducing the weight and increasing the longitudinal flexibility of the fastening member by comparison with the aforementioned known channel. Furthermore, the present invention has the unexpected advantage that the aforesaid clearance can be reduced, thereby reducing the risk of pull-out, while retaining acceptable ease of application in the closer-fitting fastening structure. The terms "wire-like or rod-like", "wire", and "rod" are not to be taken as implying any particular material or cross-sectional shape, although metal of substantially circular cross-section is usually convenient to use. The diameter of the wire is selected with regard to extrusion and other manufacturing capabilities and to give adequate balance of the strength and flexibility, e.q. 1.3 - 1.8mm, preferably 1.5mm O.D. is useful for round wires made from most stainless steels or from suitable memory metals, such as a β-brass. Such memory metals are described in our patents 4067752, 4095999 and 4036669, these disclosures being incorporated herein by refereances.Effectively equivalent diameters of other cross-sectional shapes may be used.

The fastening member will be able to exert a greater gripping action if the length of each gripping portion is decreased, and their number is increased; this is because a greater number of connecting members will thereby be provided per unit length of the fastening member. The efficiency of the fastening member can therefore be increased with no reduction in longitudinal flexibility.

Where the fastening member is an ordinary metal such as steel it must be sufficiently strong that the fastening portion or portions cannot pull-out from between its gripping portions. It is preferable therefore that the closure assembly be closed by sliding the fastening portions longitudinally between the gripping portions, rather than by snapping the gripping portions and the fastening portions together; in this way a stronger fastening member can be used. If, however, the fastening member is heat-recoverable, it can be arranged to snap over the fastening portions prior to recovery, and then recovered to ensure a tight closure. In either case, it will be desirable that the fastening member defines, in envelope, a channel having a longitudinal neck which in use can retain the fastening portion or portions of the sleeve. This channel is preferably substantially C-chaped or substantially a major part of a closed semi-circle, in cross-section.

Although the first and second gripping portions could conceivably each be a single continuous length of rod or wire, it is preferred that each comprises a plurality of segments longitudinally aligned with, and longitudinally separated from, one another. The gripping portions are preferably substantially entirely composed of such segments, preferably with any individual segment included in either gripping portion having its opposite ends respectively connected to the immediately adjacent ends of two segments included in the other gripping portion. The latter preferred arrangement provides greater longitudinal flexibility, and has the further very considerable advantage that it can be produced by shaping a single continuously ·extruded wire, thus substantially reducing or eliminating post-extrusion machining costs. The connections between the gripping protions are preferably angled so that the distance between the immediately adjacent ends of any two segments included in the one gripping portion is less than the length of the segment included in the other gripping portion to which those adjacent ends are connected. The gripping portions are preferably substantially entirely composed of the segments. Furthermore, we prefer that the distance between adjacent segments is as small as possible, limited by the desired minimum radius of rail curvature that the fastening member must follow. The smallest radii of curvature will probably ocur when the sleeve has recoverable ends and a non-recoverable central portion: in this case the ends of the sleeve will, after recovery, taper down onto the surface of the cable or other substrate covered by the closure member. The fastening member is preferably a continuous wire-like or rod-like member having a configuration such that it provides substantially all of the gripping portions and connecting members.

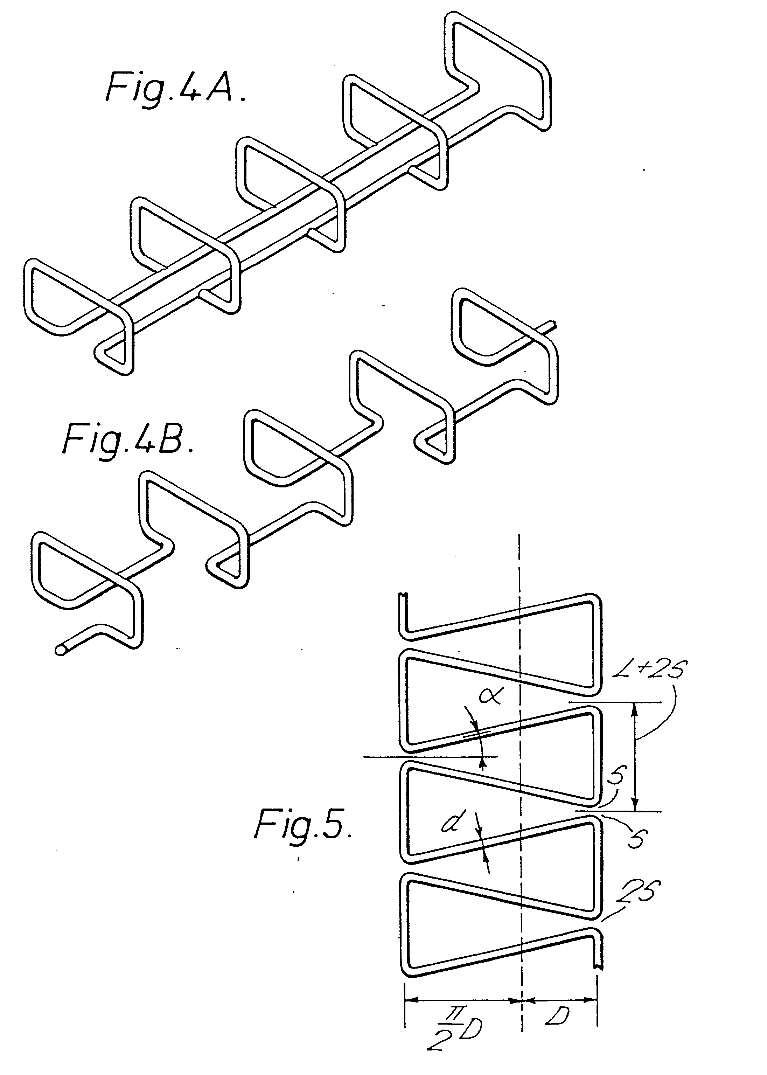

The invention will be further illustrated, by way of example, with reference to Figures 4 onwards of the accompanying drawings, in which:

Figure 4a shows a fastening member having a pair of longitudinal rods or wires as the gripping portion;

Figure 4b shows a fastening member where the gripping portions are made up of separate segments;

Figure 5 shows a wire bent within a plane, prior to being curved to form a fastening member;

Figure 6 shows in cross-section the wire of Figure 5, after being curved;

Figures 7,8 and 9 show the fastening member of Figure 6 in, respectively, top view, front view, and perspective;

Figure 10 shows the fastening member of Figure 6 made of a memory metal, in the deformed state prior to recovery.

Figure 11 shows an alternative configuration to that of Figure 5;

Figures 12a,12b and 12c show the new fastening member in a configuration analogous to that of the solid classical channel; and

Figures 13-16 show in cross-section and in perspective the fastening member embedded in an edge portion of a recoverable sleeve.

Figures 4a and 4b contrast the provision of gripping portions as single lengths of wire or as many separated segments.

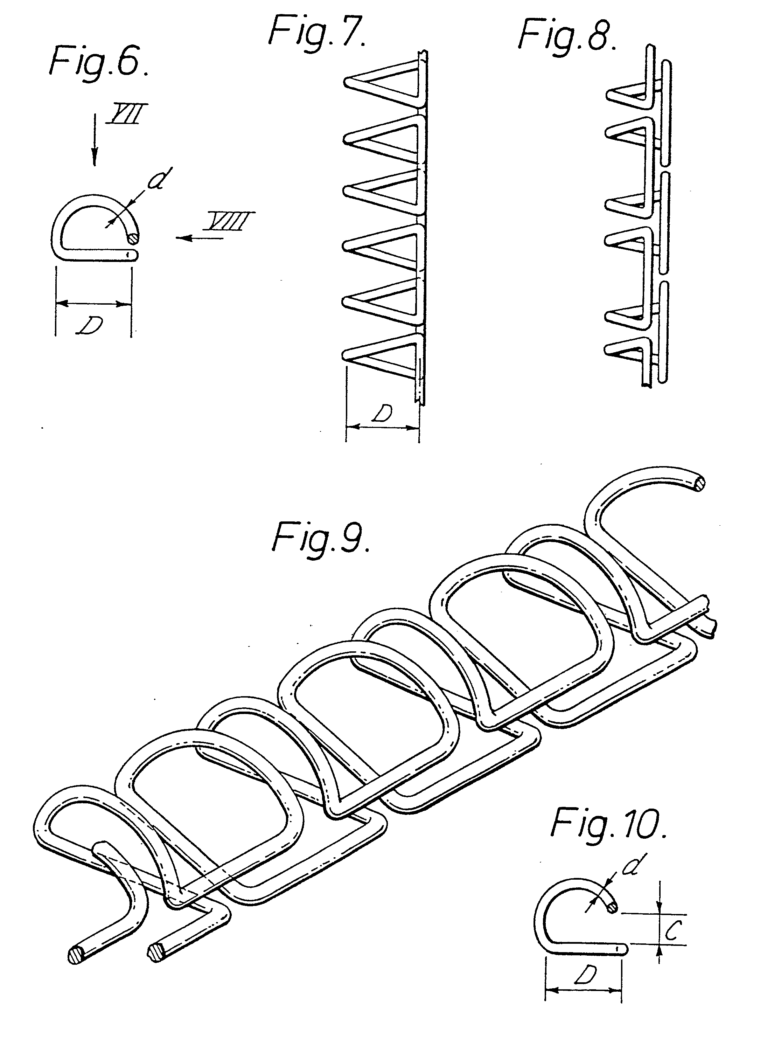

Where the fastening member is to be embedded in an edge portion of a recoverable sleeve (preferably during extrusion of the sleeve), a half cylindrical shape fastening member as shown in Figure 6 in cross-section, Figure 7 as top view, Figure 8 as front view and Figure 9 in perspective is used. To make the fastening member itself, a wire of diameter d is extruded and shaped for example first in a flat plane construction, as shown in Figure 5. The flat arrangement of wire is now bent to describe in cross-section a semi-circle of diameter D. The relationship between the diameter D of this semi-circle, the diameter d of the wire, the recurrence length L, and the angle α is approximately:

$$\frac{L}{2} - d = \frac{\pi}{2} + 1 \ D. \ tg \ \alpha$$

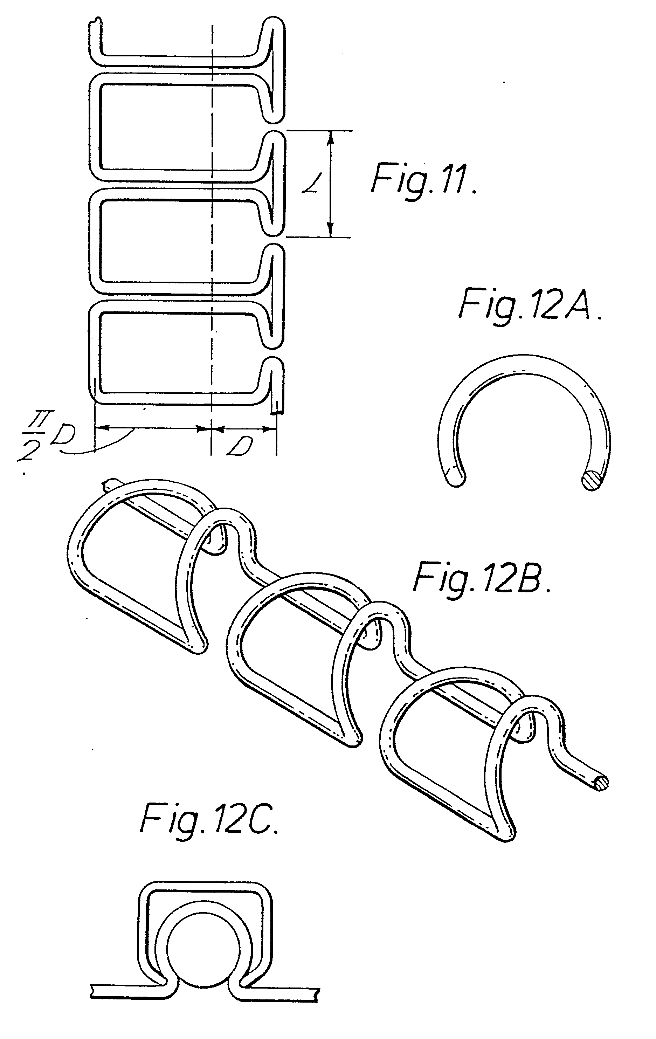

Figure 10 shows a deformed state in which the fastening member may be supplied when made of a suitable heat-recoverable metal, the recovery on heating returning it to the configuration of Figure 6 to effect a gripping action. Figure 11 shows an alternative to the flat configuration of Figure 5, and Figures 12a and 12b show a fastening member according to the present invention in a configuration which is analogous to that of known solid "classical" fastening channels. These classical channels may also be produced by suitable bending of the flat pattern shown in Figure 5 or 11. Such classical channels, if made of heat-recoverable metal, could increase the practicable recovery ratio both of standard closure systems (by reducing the risk of pull-out) and of "omega" closures in which the channel retains an Ω shaped portion of the sleeve around a locking member (Figure 12c). In some instances recovery forces of high expanded heat-shrunk polymers exceed the retention ability of non-recoverable channels in Ω closures, and in such cases recoverable fastening material will be desirable.

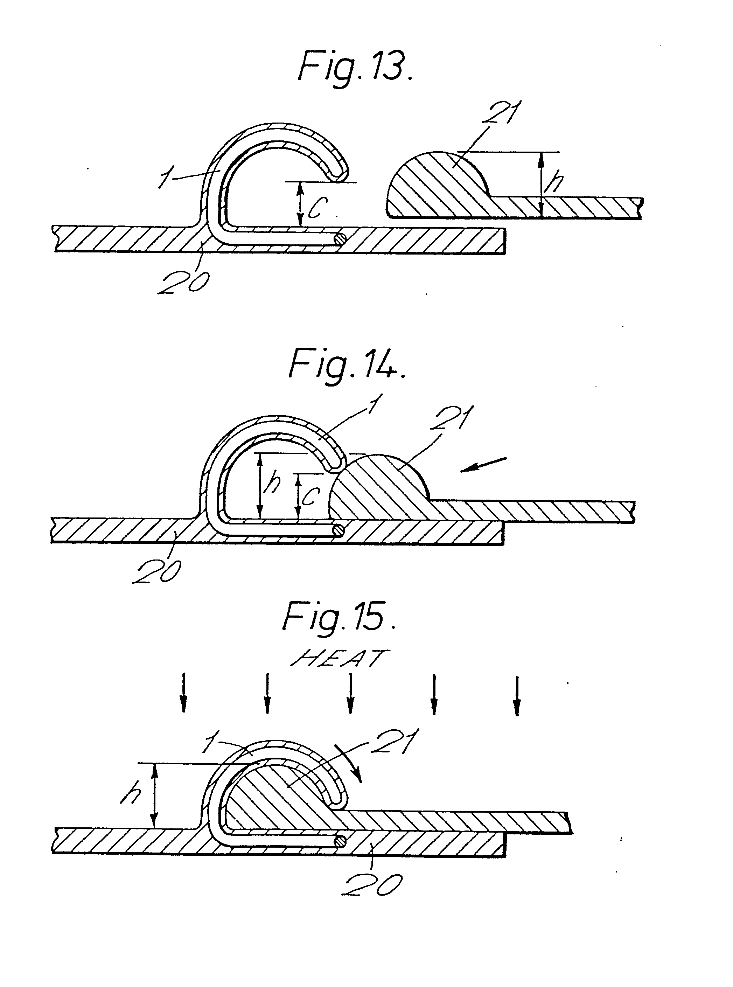

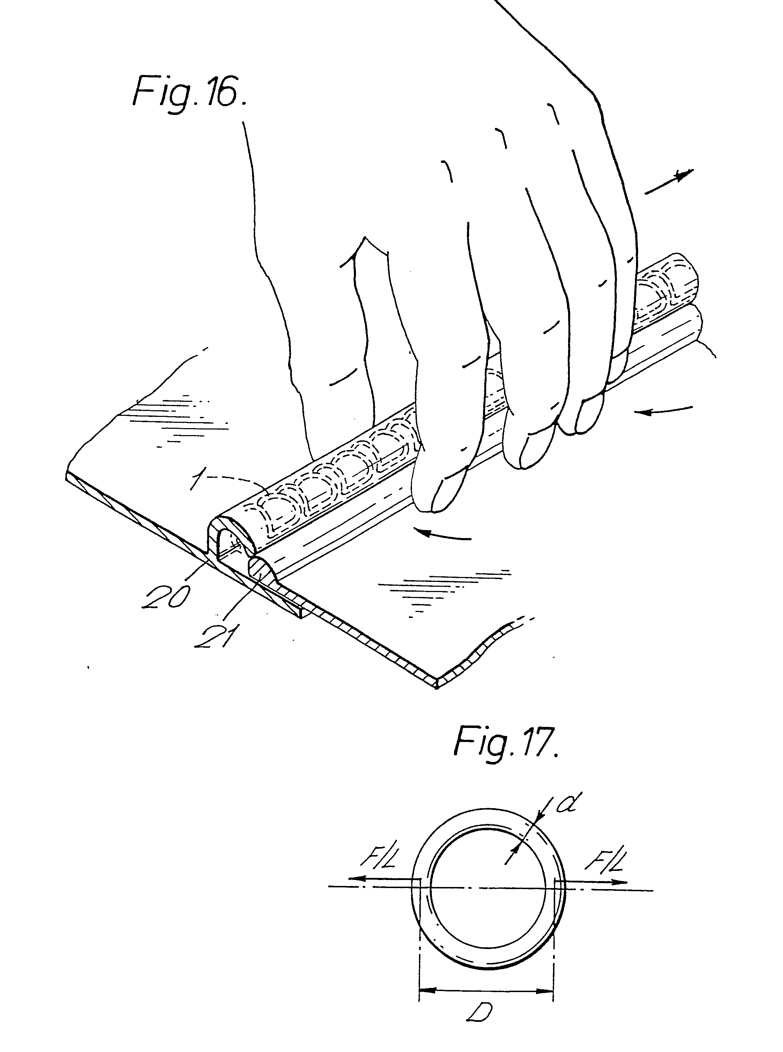

Figures 13 to 16 further illustrate the non-classical channels of the invention. In these Figures, the fastening member 1, preferably made of a heat-recoverable metal, such as that sold under the Raychem Trade Mark "Betalloy", is embedded in the fastening edge portion 20 of a wrap-around heat-shrinkable sleeve so as to form a gripping cavity capable of receiving and retaining the beaded portion 21 of opposing fastening edge of the sleeve. In use, the sleeve is wrapped around the substrate, and the two opposite matching ends are positioned towards each other, as shown in Figures 13, 14 and 16. Appropriate choice of gap C versus head height h, and of the resilience in the fastening member 1 will result, when the bead is inserted into the Betalloy cavity by pressing it lengthwise gently with fingers and thumb (see Figure 16), in a snap or positive locating and registering action. These Figures illustrate a preferred orientation of embedded fastening member, where the plane containing the first and second gripping portions is substantially perpendicular to the material of the sleeve at the join when the sleeve is closed.

Note that the circular shape of the bead top versus the Betalloy edge favours the positioning and smooth entry of the bead into the cavity, which should minimise the number of fingers/thumbs compression actions along the closure, and has the advantage that the bead can still be disengaged from the cavity to re-open the sleeve if this should prove necessary for further adjustments or operations at this stage.

This embedded construction is particularly suitable when the fastening member 1 is made of a heat-recoverable metal, especially one of the β-brass type, more especially that sold under the Trade Mark "Betalloy" by Raychem Corporation. The enveloping polymeric material of the sleeve protects the metal against corrosion and other damage, and the recovery of the metal from the deformed state (Figures 13 and 14) to the recovered state (Figure 15) upon heating effects firm fastening.

The shrinking operation must start with heating of the fastening area resulting in the recovery of the fastening member, and therefore firm gripping of the bead between its first and second gripping portions. The favourable position

of the head and the fastening member means that there will be no rotation under recovery of the sleeve, which would lead possibly to the creation of "tents" as with the previously known rail and channel joins.

Sufficient heating of a recoverable fastening member could be indicated, for example, by the extrusion outward of e.g. a white pigmented composition of appropriate melting temperature pre-installed lengthwise inside the fastening member.

If desired, a flameless closure action can be obtained by passing a heating electrical current through the Betalloy or other memory metal which, due to its wire-like construction, presents a relatively high impedance, so easing the generator design (no need for low voltage battery with thick feeding conductors).

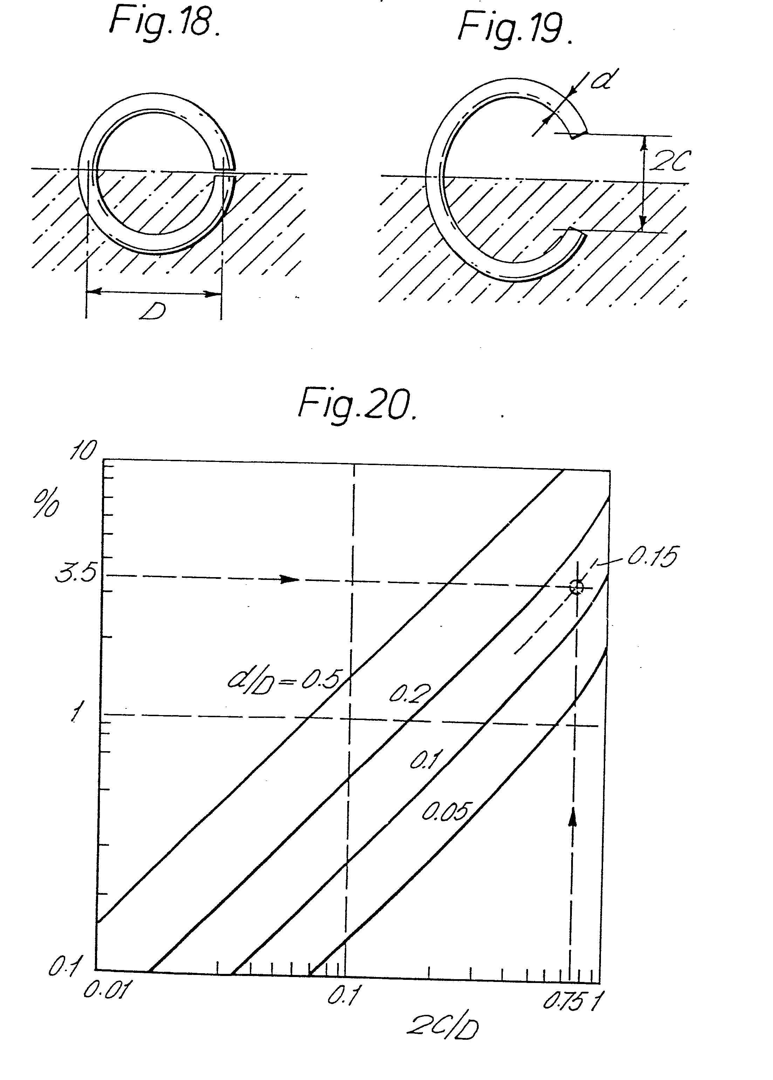

The design of the fastening member using the aforementioned "Betalloy" B-brass heat-recoverable metal may be considered with reference to Figures 17 to 20 of the drawings. The gap C and thickness d are shown in Figures 17 and 18. Figure 20 gives the value of d, for given values of C and D, by plotting % strain vertically and the value of 2C/D horizontally. For example:

For 2 C/D = 0.7, and strain = 4%
d/D is 0.15 - 0.2.
Given D = 8mm, then d = 1.2 - 1.6mm
h = 4mm

The cavity in a Betalloy fastening member in its recovered state must withstand typically a force of 8 - 12 kg/cm, generally about 10 kg/cm in the cold state, and .6 - 1.0 kg/cm, generally about 0.8 kg/cm above the crystalline melting point of the polymer.

The model can consist of a torus of Betalloy of diameter D (in the above example 8mm) and thickness d (here 1.2 - 1.6mm) stressed as shown by a force F/L (here 10 kg/cm), the strain should be less than e.g. 10%; d and D given, this defines L - see Figure 11.

Various heat-recoverable metal alloys are known, which can be used to make heat-recoverable articles, that is to say articles which have been deformed from an original configuration and which retain their deformed configuration until they are heated, when they recover towards their original configuration.

These alloys exhibit a so-called martensitic transformation from a low temperature form to a high temperature form and it is this transformation which produces the memory effect. Amongst such alloys there may be mentioned, for example, various alloys of titanium and nickel which are described for example in U.S. Patents Nos. 3,174,851, 3,351,463, 3,753,700, 3,759,552, British Patents Nos. 1,327,441 and 1,327,442 and NASA Publication SF 110, "55-Nitinol-The Alloy with a Memory, etc" (U.S. Government Printing Office, Washington D.C. 1972), which are incorporated herein by reference. The property of heat-recoverability has not, however, been solely confined to such titanium-nickel alloys. Thus, for example, various beta-brass alloys have been demonstrated to exhibit this property in e.g. N.Nakanishi et al, Scripta Metallurgica 5, 433-440 (Pergamon Press 1971) and such materials may be doped to lower their transition temperatures to cryogenic regimes by known techniques. Similarly 304 stainless steesls have been shown to enjoy such characteristics - E. Enami et al, id, at pp.663-68. These documents are also incorporated herein by reference.

Other non-heat recoverable metals may of course be used for the fastener according to the present invention, and such ordinary metals as stainless steel or spring steel may be preferred depending on the conditions of use. Any suitable heat-recoverable polymer, e.g a cross-linked polyolefin, may be used for the sleeve, the choice thereof not being critical in practising the present invention.

The sleeve with the embedded fastening member may be made by coextrusion such that the polymer completely encloses the fastening member. To ease this coextrusion process, the fastening member could be coextruded in an intermediate step with a similar compound into a half cylindrical profile of similar cross-section to the fastening member - this to fill the fastening member interstices and to ease the main coextrusion process.

The opposite end of the sleeve is extruded into a bead, having a shape such as a half circular shape of height h, which co-operates with the fastening member.

Reinforcement by coextrusion of a metal rod could be possible.

After extrusion and cross-linking, the sleeve can be expanded and otherwise treated in the usual way.

After cooling down to a sufficiently low temperature, the gap C can be created in line with an appropriately designed two or three rollers spacing system.

CLAIMS

1. A closure assembly comprising
a recoverable wrap-around sleeve (2), and
a longitudinal flexible elongate fastening member (1),
characterised in that the fastening member
comprises:
first and second wire-like or rod-like gripping portions
arranged substantially parallel to, and laterally spaced
from, each other with their lengths disposed substantially
longitudinally relative to the fastening member, and
connected to each other by each of at least three wire-
like or rod-like connecting members, which lie substantially
outside the plane containing the first and second gripping
portions;
the arrangement being such that the fastening member can
grip between, and by mutual gripping action of, its
first and second gripping portions one or more fastening
portions (20) of the sleeve (2) to hold the sleeve )2)
closed during its recovery.

2. A closure assembly according to Claim 1, characterised
in that each of the first and second gripping portions
individually comprises a plurality of segments longitudinally
aligned with, and longitudinally separated from, one another.

3. A closure assembly according to Claim 2, characterised
in that the opposite ends of any individual segment included
in either gripping portion are respectively connected to the
immediately adjacent ends of a pair of segments included in
the other gripping portion.

4. A closure assembly according to Claim 3, characterised
in that the connections are angled so that the distance
between the said adjacent ends in the one gripping portion
is less than the length of the segment in the other gripping
portion to which the said adjacent ends are connected.

5. A closure assembly according to Claim 2, 3 or 4, characterised in that the first and second gripping portions are substantially entirely composed of the said segments.

6. A closure assembly according to any of the preceding claims, characterised in that the fastening member (1) is a single continuous wire-like or rod-like member having a configuration such that it provides substantially all of the said gripping portions and the said connecting members.

7. A closure assembly according to any of the preceding claims, characterised in that the fastening member (1) is made of metal.

8. A closure assembly according Claim 7, characterised in that the fastening member (1) is a single continuous extruded wire.

9. A closure assembly according to any of the preceding claims, characterised in that the fastening member (1) comprises a heat-recoverable metal which is capable of being deformed to loosen the gripping action and of retaining that deformed configuration at a first temperature, or which has been so deformed, and is capable of recovering to its undeformed state to tighten the gripping action when subjected to a higher temperature.

10. A closure assembly according to Claim 9, characterised in that the heat-recoverable metal is a β-brass.

11. A closure assembly according to any of the preceding claims, characterised in that the fastening member (1) is encased in a polymeric material.

12. A closure assembly according to Claim 11, characterised in that the fastening member (1) is substantially completely encased in a polymeric material.

13. A closure assembly according to Claim 11 or Claim 12, characterised in that the fastening member (1) is at least partly embedded in polymeric material forming an edge portion (21) of the sleeve (2) so as to be capable of receiving and gripping a fastening portion (20) at an opposite edge portion of the sleeve(2).

14. A closure assembly according to Claim 13, characterised in that the plane containing the first and second gripping portions is substantially perpendicular to the material of the sleeve. (2) at the join when the sleeve (2) is closed.

15. A closure assembly according to any preceding claim, characterised in that the fastening member (1) defines, in envelope, a channel having a longitudinal neck, which in use can retain the fastening portion (20) or portions of the sleeve (2).

16. A closure assembly according to Claim 15, characterised in that the channel is substantially C-shaped in cross-section.

17. A closure assembly according to Claim 15, characterised in that the channel is substantially a major part of a closed semi-circle in cross-section.

18. A closure assembly according to any preceding claim, in which the sleeve (2) is heat-recoverable.

19. A closure assembly according to any of the preceding claims, characterised in that the fastening member (1) is manufactured by extruding a wire and shaping the extruded continuous wire.

20. A cable splice enclosed in a closure assembly according to any of the preceding claims.

21.   A method of manufacturing a closure assembly according to Claim 13 or 14, characterised in that a fastening member (1) is embedded in polymeric material of the sleeve (2) during extrusion of the polymeric material to form the sleeve (2).

22.   A method according to Claim 21, characterised in that the fastening member (1) has previously been enveloped in polymeric material compatible with that extruded to form the sleeve (2).

23.   A closure assembly made by a method according to Claim 21 or 22.

24.   A method of covering a substrate with a closure assembly according to any of Claims 1 - 12, characterised in that the sleeve (2) is fastened around the substrate by means of the fastening member (1) engaging the fastening portions which comprise suitably shaped elongate members carried by the opposite fastening edge portions of the sleeve.

25.   A method of covering a substrate with the closure assembly according to Claims 13 or 14, characterised in that the sleeve. is fastened around the substrate by means of the embedded fastening member (1) engaging a suitably shaped elongate fastening portion (1) carried by the other of the fastening edge portions of the sleeve.

26.   A fastening member (1), characterised in that it is suitable for use in an assembly according to any of Claims 1 - 12, 15 - 19.

27.    A longitudinally flexible elongate fastening member,
characterised in that it comprises a single length of
a wire-like or rod-like material having a configuration the
envelope of which is a channel having an elongate neck; the
elongate material forming a series of substantially linear
first regions which define each edge of the neck, and a
series of second regions which join together first regions
of one edge with those of the other edge, and whose curvature
gives the channel its cross-sectional shape.

28.    A fastening member according to Claim 27, characterised
in that the channel is substantially C-shaped in cross-section.

29.    A fastening member according to Claim 27, in which the
channel is substantially a major part of a closed semi-circle
in cross-section.

30.    A fastening member according to Claim 27,28 or 29,
characterisedd in that the wire-like or rod-like material is
such that the second portions can resist reduction in their
curvature, but which can undergo torsional distortion to
allow longitudinal flexing of the fastening member.

31.    A heat-recoverable fastening member according to any
of Claims 27-30, charaterised in that it is capable of being
deformed to reduce the curvature of the second regions and
of retaining that reduced curvature at a first temperature,
or which has been so deformed, and is capable of recovering
to the original curvature when subjected to a higher temperature.

32.    A fastening member according to Claim 31, characterised
in that it is made from a β-brass.

33.    A longitudinally flexible elongate fastening member,
comprising a single length of a wire-like or rod-like heat-
recoverable metal having a configuration the envelope of
which is a channel having an elongate neck.

34.   A fastening member according to Claim 33 and to any of Claims 27-32.

35.   A closure assembly comprising:

   wrap-around sleeve, provided with fastening means adapted to retain opposed edge portions of the sleeve in proximate, preferably abutting, relationship during recovery; characterised in that the fastening means comprising at least one fastening portion of the sleeve and an elongate channel-shaped fastening member having a longitudinally-segmented articulatable structure formed from bent wire or rod.

36.   A closure assembly according to Claim 35, characterised in that the fastening member is heat recoverable.

Fig.1.

Fig.2.

Fig.3.

Fig.4A.

Fig.4B.

Fig.5.

Fig.6.

Fig.7.

Fig.8.

Fig.9.

Fig.10.

Fig.11.

Fig.12A.

Fig.12B.

Fig.12C.

## Fig. 13.

1

21

C.

h

20

## Fig. 14.

1

21

h

C

20

## Fig. 15.

HEAT

1

21

h

20

0034500

Fig.16.

1

20

21

Fig.17.

d

F/L

F/L

D

0034500

# Fig.18.

# Fig.19.

$d$

$2C$

$D$

# Fig.20.

10
%

3.5

1

0.1

0.15

$d/D = 0.5$

0.2

0.1

0.05

0.01

0.1

0.75 1

$2C/D$

# EUROPEAN SEARCH REPORT

**European Patent Office**

Application number

EP 81300661.6

## DOCUMENTS CONSIDERED TO BE RELEVANT

| Category | Citation of document with indication, where appropriate, of relevant passages | Relevant to claim |
|---|---|---|
| X | <u>DE - A1 - 2 652 014</u> (COAL INDUSTRY)<br><br>+ Totality +<br><br>& GB-A-1 503 328<br><br>-- | 1,2,6,<br>7,9,11,<br>13,15,<br>17,18,<br>20,26,<br>27,33,<br>35,36 |
| X | <u>DE - A1 - 2 820 181</u> (SIEMENS AG)<br><br>+ Page 4, lines 16-26; page 6, lines 1-22; fig. 1-4 +<br><br>-- | 1,2,5,<br>6,7,9,<br>15,18,<br>19,26,<br>27,35,<br>36 |
| X,P | <u>US - A - 4 219 051</u> (D'HAEYER)<br>(26-08-1980)<br><br>+ Claims 1,19-25; fig. 1-3 +<br><br>& DE-A1-2 635 001 (24-02-1977)<br>& GB-A -1 561 125 (13-02-1980)<br>& FR-A1-2 320 491 (04-03-1977)<br><br>-- | 1,9,15,<br>16,17,<br>18,26,<br>27,28,<br>29,35,<br>36 |
| P | <u>GB - A - 2 038 924</u> (RAYCHEM CORPORATION)　(30-07-1980)<br><br>+ Totality +<br><br>& DE-A1-2 949 173 (26-06-1980)<br>& FR-A1-2 443 633 (04-07-1980)<br><br>-- | 1,6,7,<br>9,18,<br>26,27,<br>35,36 |
| | <u>DE - A1 - 2 652 617</u> (N.V. RAYCHEM S.A.)<br><br>+ Page 14, lines 27-32; page 15, lines 1-24; fig. 10 +<br><br>-- | 1,6,9,<br>18,26,<br>27,35,<br>36 |
| | <u>DE - A1 - 2 906 450</u> (N.V. RAYCHEM S.A.)<br><br>+ Totality +<br><br>-- | 1,6,9,<br>18,26,<br>27,35,<br>36 |

**CLASSIFICATION OF THE APPLICATION (Int Cl.)**

F 16 B 4/00
H 02 G 15/18
F 16 L 13/00
B 23 P 11/00

**TECHNICAL FIELDS SEARCHED (Int. Cl.³)**

F 16 B 4/00
H 02 G 15/00
F 16 L 13/00
B 23 P 11/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| X | The present search report has been drawn up for all claims |

| Place of search | Date of completion of the search | Examiner |
|---|---|---|
| VIENNA | 08-05-1981 | SCHUGANICH |

EPO Form 1503.1　06.78

European Patent Office

**EUROPEAN SEARCH REPORT**

Application number

EP 81300661.6

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | GB - A - 1 554 433 (RAYCHEM CORPORATION)<br><br>+ Totality +<br><br>-- | 1,9,11, 18,26, 35,36 | |
| | FR - A2 - 2 306 783 (RAYCHEM<br><br>+ Totality +<br><br>& GB-A-1 554 431 & GB-A-1 554 433<br><br>-- | 1,9,11, 18,26, 35,36 | |
| A | FR - A1 - 2 297 342 (N.V. RAYCHEM S.A.)<br><br>+ Totality +<br><br>---- | 1 | TECHNICAL FIELDS SEARCHED (Int. Cl. 3) |

EPO Form 1503.2  06.78